# EUROPEAN PATENT APPLICATION

(11) **EP 2 161 561 A1**
(43) Date of publication of application: **10.03.2010**
(21) Application number: 08275047.2
(22) Date of filing: 03.09.2008
(51) Int. Cl.: G01N 15/02, G01N 1/22, B01D 46/12

(54) **Particle separators**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

A particle separator stage in a particle separator includes an inflow passage 30 of generally annular, axially facing form. In other embodiments, an asymmetric geometry is disclosed in which the major flow is taken from one side only. These features combine to allow compact, multi-stage separators to be produced. Also disclosed an arrangement in which the flow rate at a location within the separator stage is measured and used to control the flow rate there or elsewhere.

## Description

This invention relates to particle separators and to apparatus and instruments incorporating particle separators.

Particle separators are well known for sorting airborne particles or aerosols into fractions each containing different ranges of particle size. In a known example of such devices, particle laden air is drawn through a nozzle and accelerated. It is then subjected to a faster-moving cross-flow (known as the major flow) drawn in opposite directions from the median axis of the inflow. Small particles are entrained into this major flow, whilst larger particles, having a greater inertial mass, continue straight on into a slower-moving minor flow which passes down a minor flow passage generally aligned with the inflow passage. The small and large particles are therefore separated and redirected down distinct channels. A particle separator where the primary function is to separate the fluid into different fractions is known as a 'virtual impactor'. Particle separators where the particles of one of the fractions impact on a surface for capture is called an 'inertial impactor'. The present invention is concerned with both virtual impactors and inertial impactors.

Particle separators are used in a wide range of applications such as environmental monitoring, aerial prospecting, etc., but in recent years have become of significant interest in counter terrorism. The risk of bio-terrorism in both civil and defence environments means that there is a need for constant air monitoring devices that deliver rapid and accurate detection of threat agents especially of biological or chemical form.

In our earlier published applications, WO06/048641 and WO06/027591, we describe particle separators and collectors of compact size suitable for portable use. In these devices, an inlet plate is formed with 37 inlet holes forming a first stage virtual impactor. Within each inlet hole is a radial gallery containing 657 holes through which the major flow from the first stage impactor is drawn. Each of these 657 holes form, the inflow to respective second stage virtual impactors. In one example the inflow to the first stage may contain particles ranging from less than 2µm to greater than 32µm. The impactor is designed so that 5% of the total mass flow passes into the minor flow, taking with it all the large particles of 32µm and above, as well as (unavoidably) a small percentage of those less than 32µm in diameter. The minor flow carrying the large particles goes into a cylindrical plenum chamber and through a series of tubes at the outer edge of the device to be exhausted back to atmosphere via the fan that drives the device. The major flow from the first stage, containing particles less than 32µm in diameter is drawn through the 657 second stage virtual impactors and size classified once more. Small particles of less than 2µm in diameter are extracted in the second stage major flow. The remaining medium size particles in the size range of interest (between 2µm and 32µm) have now been isolated. In each stage, the major and minor flow fractions are 95% and 5% respectively. This means that the particles of interest have been concentrated into approximately 4.75% (95% x 5%) of the initial volumetric flow rate. This flow is then channelled onto a spinning micro-fluidic disc for analysis.

This device performs extremely well and is effective in isolating and concentrating particles for subsequent analysis. However, although the device is effective in this respect, the Applicants have developed several improvements to enhance the performance of the device.

In the earlier devices described above, the asymmetrical distribution of inlets in the first and second stage means that air is not drawn constantly across the device. Such non-uniform flow means that the particle separators may not all operate uniformly at their design point, even though effective separation is achieved.

The Applicant's earlier devices require complex flow paths. All of the separated air fractions must be kept apart and channelled to different places. However, the requirement to be compact means that all channels are physically very close to each other and the routes they take are often complex. The complex flow paths contribute to a significant pressure drop, particularly for the majority air fraction carrying the smallest particles. This is due to friction losses, and the losses associated with changes in cross-section, bends, fittings etc. This in turn means that a more powerful fan and motor has to be used. This then has implications for system size, power requirements and operating noise.

Furthermore, the complexity of the design makes the device difficult to manufacture, especially the very intricate second stages. A simpler device is therefore desirable, which should be designed so that it is considerably easier to make and is suitable for mass production.

Finally, the current collector is not ideally suited to accommodating different sample rates. It is possible that different applications may require higher or lower than 200 litres per minute sampling, whilst still retaining the same cut-off points. A device that is scalable, i.e. constructed out of modular units (that are mass producible) is desirable.

Accordingly, in the present specification we describe a number of significant improvements to the original design to address at least some of the matters referred to above. In the preferred embodiments below we have redesigned the architecture of the first and second stages to improve pressure distribution and to reduce the complexity of the flow paths to produce a design which has improved pressure distribution, which is easier to manufacture and has a lower pressure drop across the device. This has been achieved in part by replacing the multiple first stage inlets (37 in the earlier example) by a much lower number of inputs and indeed in several examples by a single inlet.

US7261007 discloses a circumferential slot virtual impactor of cylindrical form including a disc-shaped housing with an endless circumferential slot extending around its edge for receiving aerosols. The slot forms an acceleration nozzle through which inflow is drawn in radially around the periphery of the device. The inflow and minor flow directions are therefore radially inwardly. A two-stage device is also described in which a second stage is disposed radially inwardly of the first stage, with the second stage inflow and minor flow directions aligned radially with those of the first stage. This design provides the feature of passing the inflow through an endless circumferential slot, but is limited in terms of the requirement for the first and second stages to be disposed radially as this constrains the dimensions and flow paths of the second stage.

Accordingly, in one aspect this invention provides a particle separator comprising a body having a central axis, and at least one particle separator stage defined within said body, said particle separator stage including:
an inflow passage portion having a cross-section in a plane perpendicular to said central axis that is of endless loop form, said inflow passage receiving an inflow,
at least one major flow passage portion communicating with and extending at an angle to said inflow passage portion for receiving a major flow fraction, and
a minor flow portion arranged downstream of said inflow passage portion, for receiving a minor flow fraction.

By this arrangement, instead of using a multiplicity of first stage inlets as in the previous design, a single, endless slot nozzle may be provided which receives flow in a direction generally parallel to the central axis. The inflow passage portion receives inflow in a generally axial direction. In certain preferred arrangements this means that, for a given stage, a single inflow passage of extended dimensions is used rather than a multiplicity of individual inlets. This considerably reduces cross-flow effects, and also considerably simplifies the design of flow passages through the device.

Preferably said minor flow portion also has a cross-section in a plane parallel to said central axis that is of endless loop form and although the inflow passage and minor flow portion passages may be rectangular, elliptical or otherwise shaped, it is preferred for them to be of generally annular cross-section concentric with said central axis.

Although the particle separator may comprise a single stage, it is preferred for there to be a series or cascade of at least two particle separators, each separating the respective inflow into fractions according to particle size ranges and also providing a concentrating effect. Thus in one embodiment, the aforementioned particle separator stage may be a second or succeeding particle separator stage in a series thereof, with the aforementioned particle separator stage receiving inflow from a preceding particle separator stage, the preceding particle separator stage comprising a respective inflow passage disposed generally concentrically and parallel with said central axis, and having at least one major flow passage portion communicating with and extending at an angle to said inflow passage, for receiving a major flow fraction, and a minor flow passage portion generally concentric with said central axis and aligned with or forming part of said inflow passage portion, for receiving a minor flow fraction. The inflow passage of the preceding stage may be annular or, in many cases, of generally circular cross-section concentric with said central axis. In this arrangement, therefore, the inflow to the particle separator may enter the device through a central circular passage, with the major flow being drawn through a ring manifold or the like surrounding the inflow passage, the ring manifold walls being solids of revolution to deliver flow to the annular inflow portion of the next stage.

In existing particle separators of the virtual impactor or inertial impactor type, there are twin symmetric major flow passage portions drawing fluid in opposite directions away from the centre line of the inflow. This geometry is awkward because it means that the necessary walls have to be accommodated in the structure and this contributes to the complexity of the design. Also, if the major flow is to be collected and then passed to a particle collector or to a succeeding separation stage, the inflow passages must be provided to recombine the flow, again adding to complexity and pressure loss. We have discovered that, surprisingly, it is possible to provide a particle separator of asymmetric form with the major flow being drawn off from one side only. This considerably simplifies the design of the device. In preferred embodiments therefore, the major flow is drawn off from one side only of the inflow.

Accordingly in another aspect this invention provides a particle separator comprising an inflow passage portion and an outflow passage portion for receiving a minor flow portion, and to one side only of said inflow passage portion, a major flow passage portion.

In addition to simplifying the design of multi-stage separators this asymmetric design allows stages to be alternately aligned with the inflow of successive stages being perpendicular (or at another desired angle) rather than being generally parallel as has been the case in the past. The ability to have the inflow directions other than parallel again provides important opportunities in terms of compact separator design.

In yet a further aspect this invention provides a particle separator comprising a body having a central axis and including a particle separator stage, said particle separator including at least one inflow passage extending generally radially to receive an inflow, a major flow passage portion extending at an angle from one side only of said inflow passage portion for drawing a major flow fraction, and a minor flow portion downstream of said inflow passage portion for drawing a minor flow fraction.

Whilst the invention has been described above, it extends to any inventive combination or sub-combination of features disclosed in this specification.

The invention may be performed in various ways, and, by way of example only, various embodiments thereof will now be described in more detail, reference being made to the accompanying drawings, in which:
Figure 1 is a general schematic view of a multi-stage particle separator made up of first and second virtual impactors;
Figure 2 is a schematic quarter section view through part of a two stage virtual impactor;
Figure 3 is a half section view of just the second stage of the arrangement in Figure 2;
Figure 4 is a schematic quarter section view of a modified form of two stage inertial separator in which the major flow in the second stage is drawn from one side only;
Figures 5(a) and (b) are views of a further embodiment of two stage impactor in which the first stage inflow is drawn radially and the second stage is an inertial impactor, and a quarter section view thereof respectively;
Figures 6(a) to (f) are views of an embodiment of inertial impactor with radial inflow and the major and minor flow taken in opposed streamline directions, in quarter solid, complete, quarter section and streamline views respectively;
Figures 7(a) to (f) are respective radial section views of a number of different embodiments of a two stage separator comprising a first stage virtual impactor and a second stage inertial impactor;
Figure 8 is a radial section view of a further embodiment of a two stage impactor comprising a first stage inertial impactor and a second stage inertial impactor;
Figure 9 is a radial section view of a further embodiment of separator comprising four stages with the third and fourth stages comprising inertial impactors depositing on a CD;
Figures 10(a) and (b) are views on the inlet to a separator with no shaping and with shaping respectively;
Figure 11 is a section view through a separator with divergent shaping of the minor flow passage;
Figure 12 is a schematic view showing an embodiment of particle separator incorporating a Venturi meter, with the measurement of the flow rate being used to control a variable aperture inflow inlet.

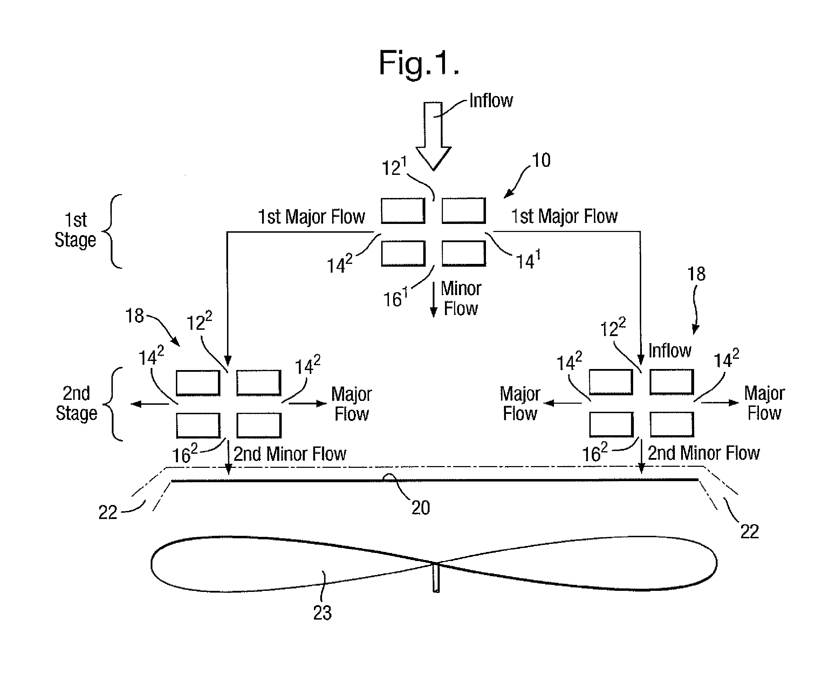

Referring initially to Figure 1, there is shown a schematic representation of a particle separator and collector. In this arrangement air to be sampled is passed to the inflow passage 12¹ of a first stage virtual impactor 10 where the majority of particles above a cut off threshold are drawn into major flow passages 14¹ which make up about 95% of the volumetric flow, and the heavier particles pass through the minor flow passage 16 together with the remaining 5% of the volumetric flow to be vented outside the device. The major flow portions pass to second stage particle separators in the form of virtual impactors 18 where the particle sizes smaller than the second stage threshold cut off are drawn off through the major flow portions 14² with the heavier particles passing through the minor flow passage 16². As an alternative, illustrated in dotted lines, an inertial impactor configuration may be provided between the second stage and the substrate so as to draw off a major flow fraction through a port 22 at the edge of the substrate 20. In this arrangement, the various particle separators are interconnected, and the flows drawn through the separator by means of a fan 23.

In the earlier devices designed by the Applicants, there were 37 first stage separators each feeding 657 second stage separators, so in all there were 37 x 657 = 24309 second stage separators. In the embodiments described below, instead of having numerous individual first and second stage separators for each stage, an annular configuration is used so that just one second stage annular separator is used per first stage, which itself may be a single stage.

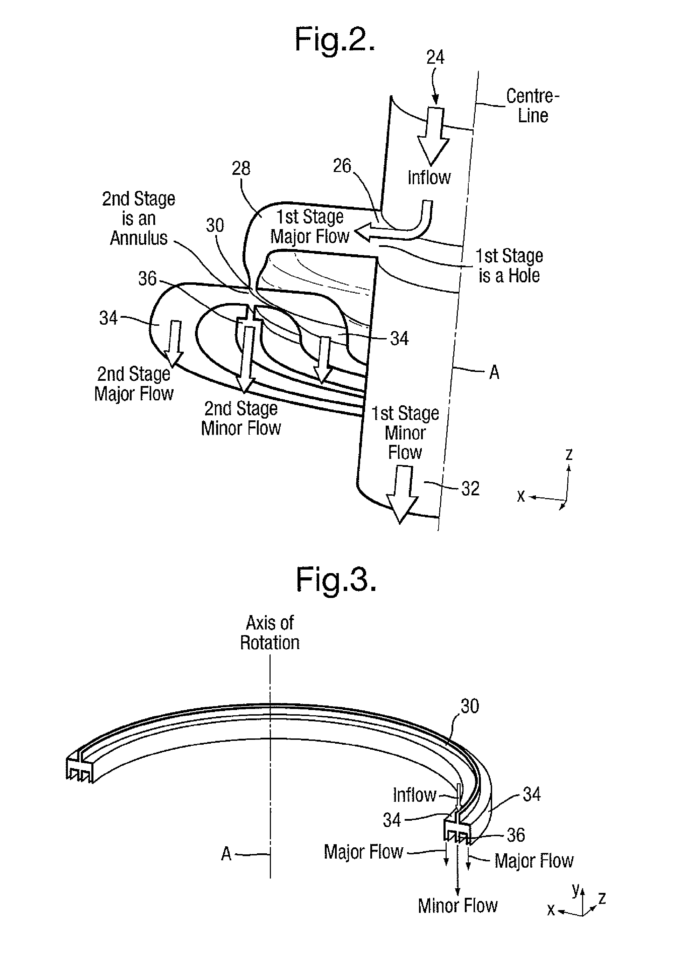

Referring to a first embodiment shown in Figure 2, a central circular inflow passage 24 is provided along a central axis 'A'. Communicating laterally with the inflow passage through a throat 26 is a ring manifold 28 extending 360° around the inflow passage and communicating via said manifold 26. The manifold 28 draws the first stage major flow portion with the lighter particle fraction and supplies it to the second stage separator. The first stage minor flow portion passes down a minor flow passage 32, which here is a continuation of the inflow passage 24. The major flow passage turns through 90° to pass the first stage major flow into an annulus 30 which acts as the inflow passage for the second stage. As previously, the second stage major flow is drawn laterally from the annular inflow by two opposed lateral major flow passages 34, which turn through 90° to discharge downwardly, in this embodiment. The second stage minor flow passage comprises a further annular slot 36. The required fraction from the second stage minor flow or major flow may then pass to a particle collector, or other detection device, or a subsequent particle separation stage.

In this example the first stage major flow portion is drawn through a manifold 28 in the form of a complete ring running all the way around the inflow, i.e. a radially expanding annulus. In other arrangements it could be a series of pipes, although a complete ring is preferred. If internal support is required, pillars may be provided, which may have a streamlined shape to take up as little volume as possible.

It will be appreciated that the walls defining the first stage inflow passage 24, the first stage major flow passage 28 and the various components (30, 34, 36) of the second stage are formed as solids of revolution about the centre line A of the device. Figure 3 is a schematic detail of the second stage showing the inflow, minor flow and major flow paths. As previously, the major and minor flows through the first and second stages are produced by means of one or more fans, with the respective minor:major volumetric amounts being determined by appropriate selection of the fan mass flow rate, the flow passage cross-sections and flow dynamics considerations.

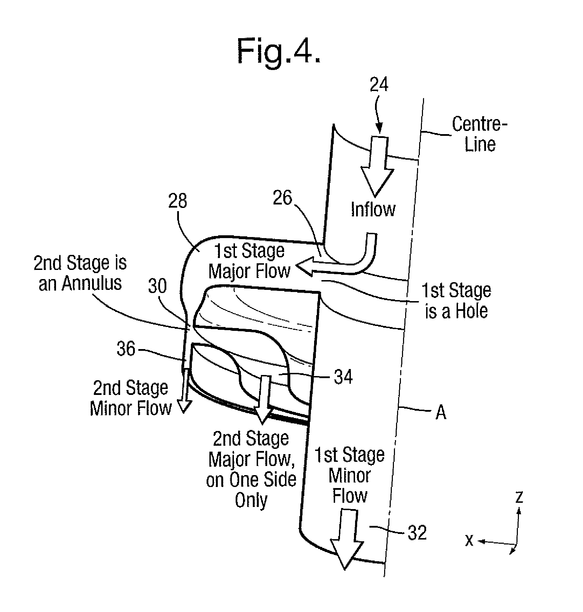

Referring now to Figure 4, instead of the second stage major flow being drawn from opposed directions radially inwardly and radially outwardly of the annulus, it is drawn from one side only; this reduces the radial cross-section of the device and makes for a compact design. It will be appreciated that of course the major flow could be taken in the radially outward direction instead if required. The construction and operation of this device is otherwise similar to that of Figure 3.

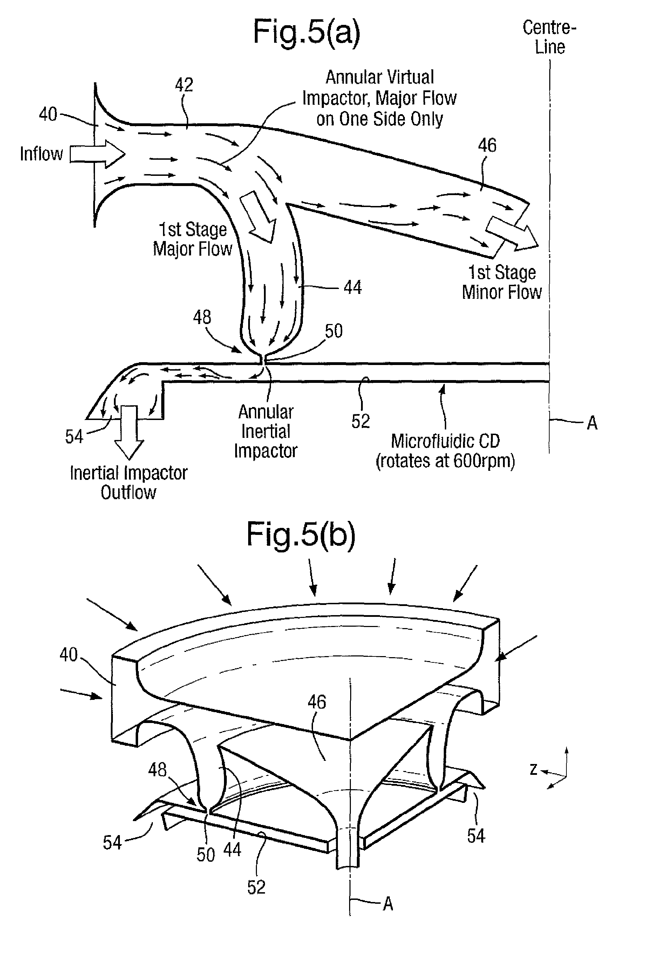

Referring now to Figures 5(a) and (b), there is shown another embodiment of virtual impactor, whose walls again are formed as solids of revolution about the central axis A to define a radial inflow slot 40 extending around the periphery of the device and drawing inflow in radially into the inflow portion 42. A single major flow portion 44 of annular form draws the major flow transversely, turning to a direction generally parallel to that of the centre line A. The minor flow passes along a minor flow portion 46 that exhausts near the central axis A. In this arrangement, the first stage major flow is supplied to a second stage annular inertial impactor 48 comprising an annular slot 50 concentric with the central axis A. Spaced beneath the slot 50 is a micro-fluidic CD 52 rotating at high speed (typically 600rpm). The inertial impactor outflow is drawn from the periphery of the micro-fluidic CD as shown at 54. In this arrangement therefore, the inflow through radial slot 40 is separated into first stage major flow and minor flow portions, with the first stage major flow being separated into a second stage minor flow portion that impacts on the CD 52, with second stage major flow being drawn through the outflow 54. An important point to note with the arrangement of Figures 5(a) and (b) is that the inflow to the first stage is in a radial direction with respect to the central axis, whereas that to the second stage is perpendicular to the axis. This enables a more compact design to be realised. As a variant on the arrangement of Figure 5, the inflow, rather than being supplied through a continuous circumferential slot 40 could be supplied radially through a series of radially facing ports.

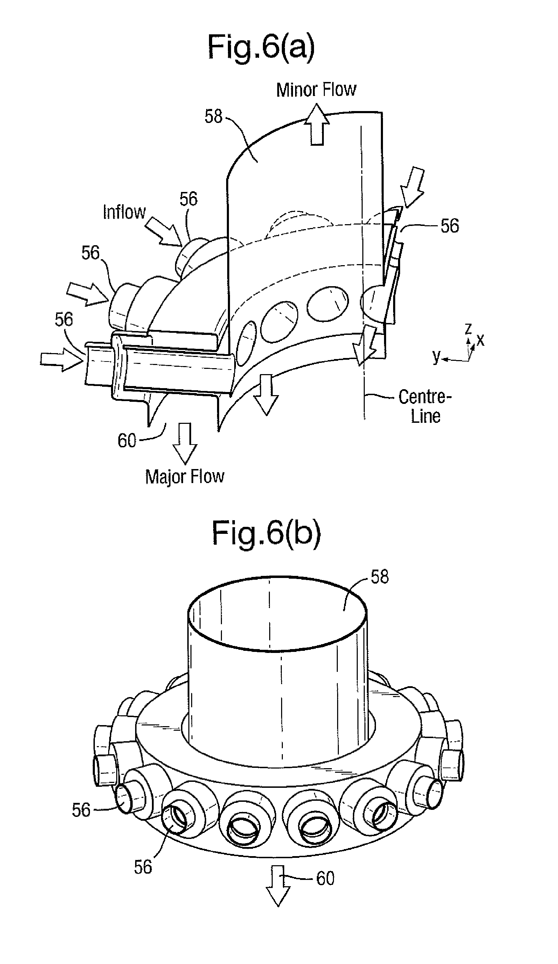

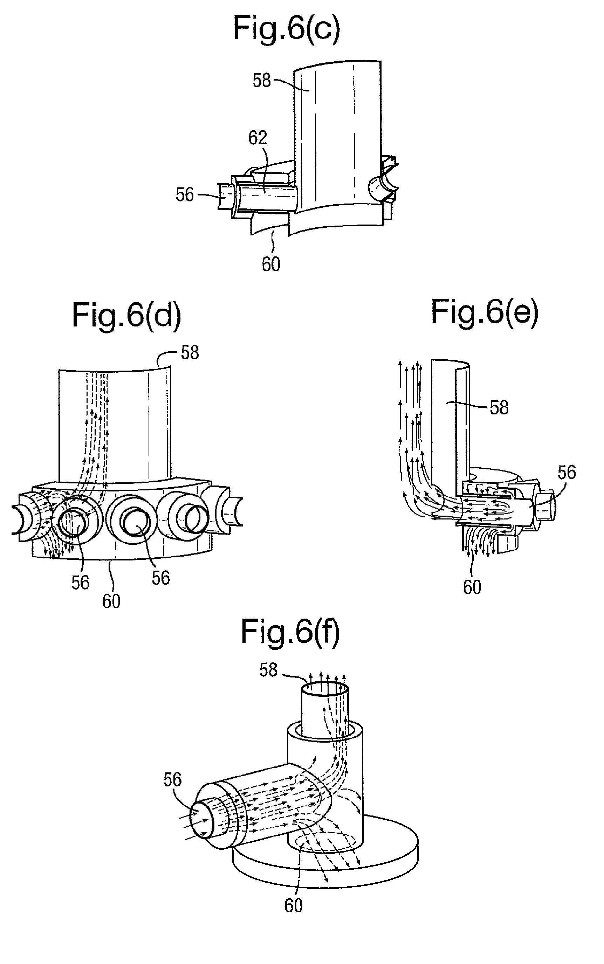

Referring now to Figure 6, in this arrangement the inflow is supplied through a series of radial ports 56 with the minor flow being ducted upwards through a minor portion 58 and the major flow being drawn downwards, in one direction only, through an annular major flow passage 60. As can be seen more particularly in Figure 6(c) the inflow passes through ports 56 with the major flow being drawn downwards to the major flow portion 60, around a cylindrical tube 62 along which the minor flow passes to the minor outflow portion 58. Essentially the minor flow continues along the axis of the radial inflow and then is commoned Into an axial exhaust flow passing upwards, whilst the major flow is initially pulled off axially all the way around each individual inflow, and then commoned up and pushed downwards to one side only into an annulus from which it passes to a second stage separator. Figures 6(d) and (e) are streamline views and Figure 6(f) is a view of an individual first stage inflow section.

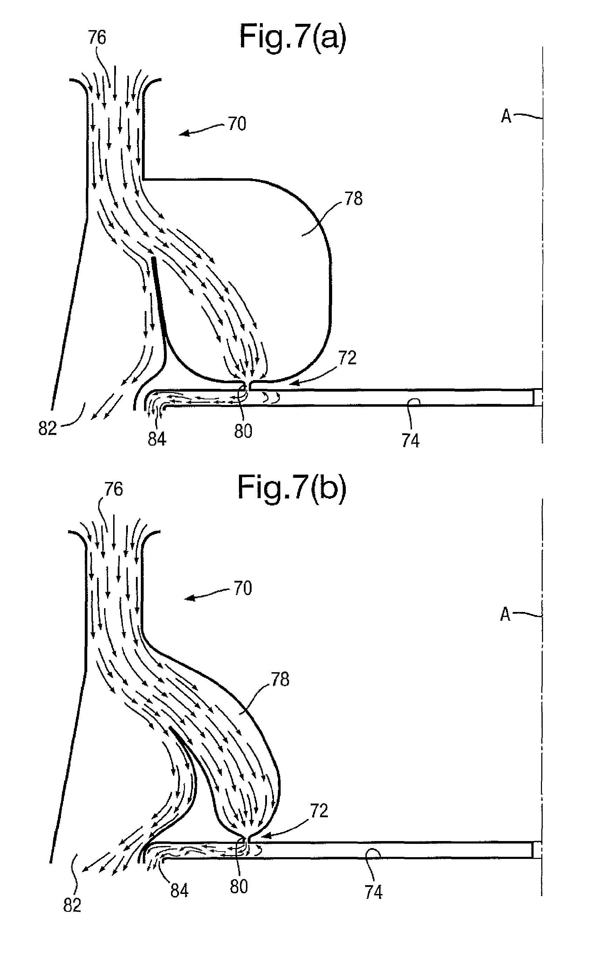

In Figures 7(a) to 7(f) there are shown various embodiments of this invention in which a first stage annular virtual impactor 70 delivers its major flow portion to a second stage annular inertial impactor 72 to deposit the particles from the second stage minor flow component onto the surface of a substrate 74, here in the form of a spinning micro-fluidic disk. In the arrangements of Figures 7(a) and (b) the first stage inflow enters through an annular intake 76, and the major portion is taken from one side only, (here in the radially inward direction) into a major flow portion 78, having an annular slot 80 at its lower end. The first stage minor flow portion passes through an outflow portion 82. The first stage major flow portion entering the second stage separator at 80 is subjected to a radial flow across the surface of the spinning CD 74 so that all the second stage flow is drawn radially outwards with the large particles impacting on the surface of the CD. The second stage flow then exhausts at a circumferential slot 84 at the edge of the CD with the small particles. Although in this embodiment the impaction surface is the upper surface of a spinning CD it will of course be appreciated that numerous other impaction surfaces (stationary or moving) may be used according to the particular implementation.

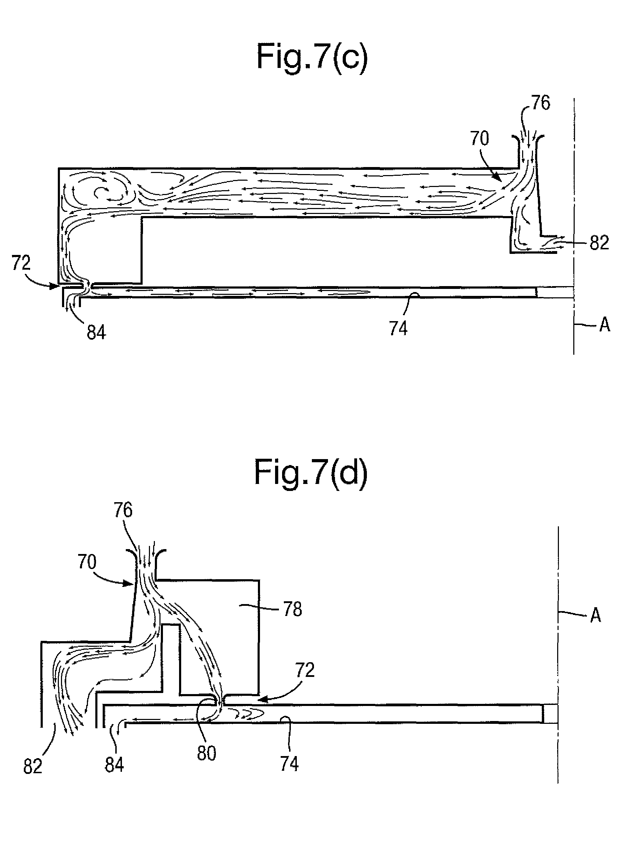

Referring now to Figure 7(c), in this arrangement, the first stage virtual impactor 70 has an annular inflow region at a radially inner portion with the first stage major flow portion extending radially parallel with the CD 74 and travelling radially to the second stage impactor 72 where, again, the second stage minor flow portion impacts the surface of the CD with the second stage major portion being drawn away from the surface of the CD through a circumferential slot 84. The first stage minor flow exists through outlet 82.

In the arrangement of Figure 7(d), the first stage inflow is in the form of an annular slot at a radial position near the periphery of the CD. The minor flow portion passes through a minor outflow passage 82 whereas the major flow region 78 receives the major flow portion and passes it to an annular slot 80, which again acts as part of a second stage inertial impactor with the second stage minor flow being directed onto the CD and the major flow being drawn radially through a circumferential slot 84.

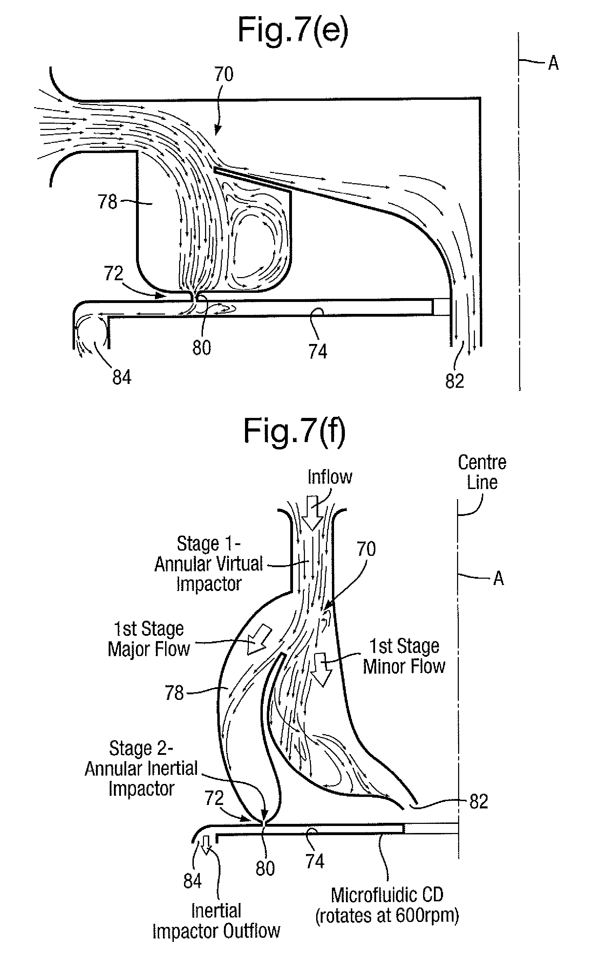

In the arrangement of Figure 7(e), the first stage inflow is through a radial slot with the first stage minor flow passing towards the central axis and the major flow passage 78 directing the first stage major flow portion to a slot 80 forming part of an inertial impactor. As previously, the second stage minor flow is directed towards the surface of the CD and the major flow drawn off.

In the embodiment of Figure 7(f), the inflow is drawn through an annular slot to the first stage, separated into first stage major and minor flows with the major flow passing through a major flow passage 78 to a slot 80 which forms part of an inertial impactor with the second stage minor flow being directed towards the surface of the CD 74 and the major flow being drawn through a circumferential slot 84 at the edge of the CD.

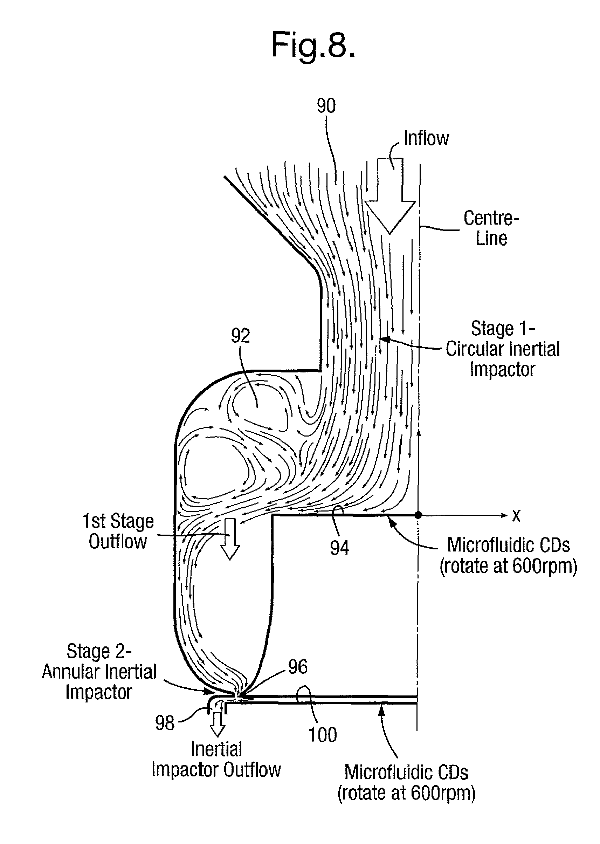

Referring now to Figure 8, there is shown a two stage arrangement designed to deposit particles on upper and lower micro-fluidic CDs and defining two inertial impactor stages. In this arrangement, flow enters the upper end of the device through a circular cross-section passage defining an inflow 90, which communicates with a major flow passage portion here in the form of an annular ring 92 which draws off the first stage major flow portion. In this arrangement the first stage minor flow portion impacts the upper micro-fluidic CD 94. The major flow passage 92 as before turns through 90° to direct the first stage major flow to the second stage inertial impactor through an annular slot 96. In the second stage inertial impactor, the major flow is drawn out through the inertial impactor outflow 98 whilst the major flow with the heavier particles in it impacts the lower CD 100.

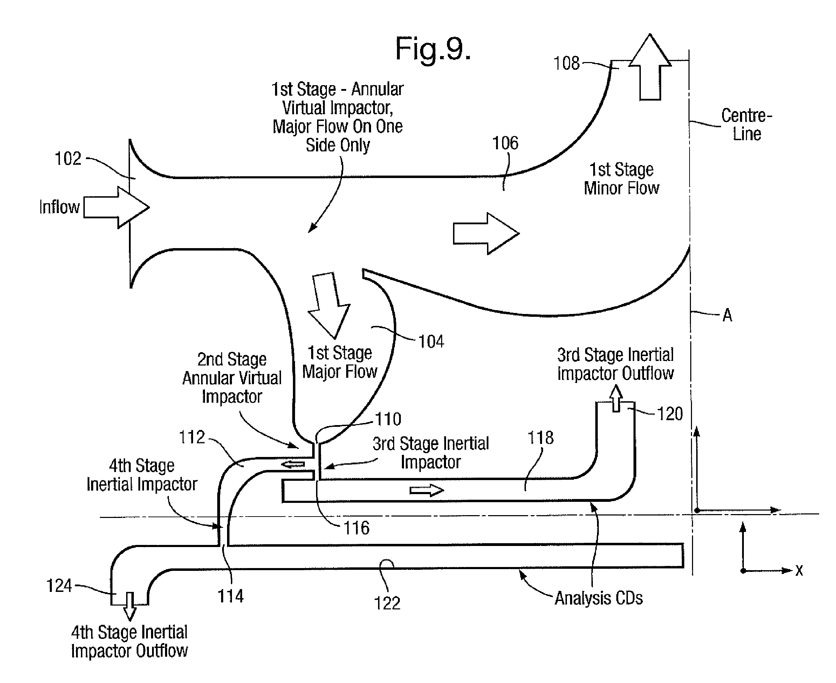

Turning now to Figure 9, there is shown a four stage separator comprising a first stage annular virtual impactor, a second stage annular virtual impactor, a third stage inertial impactor and a fourth stage inertial impactor. In this arrangement, the incoming flow to the first stage passes through a circumferential slot 102 to enter the first stage impactor radially. The first stage major flow is drawn through an annular flow passage 104 with the first stage minor flow passing to a minor flow portion 106 which turns through 90° to exhaust the first stage minor flow in a direction to the central axis A, through a central outflow port 108 of circular cross-section. The first stage major flow passing through the first stage major portion 104 passes to an annular slot 110 which serves as the inflow for the second stage annular virtual impactor. The major flow is drawn radially outwardly through a circumferentially extending major flow passage 112 which turns through 90° to terminate in a fourth stage slot 114. The minor flow from the second stage virtual impactor passes through a third stage slot 116 of annular form with the major flow being drawn radially inwardly above the surface of an upper CD 118 to exhaust through a third stage inertial impactor outflow port 120. The third stage minor flow fraction impinges on the surface of the CD 118. At the fourth stage inertial impactor, flow passing through the annular slot 114 enters a space above the lower CD 122, with the fourth stage major flow passing radially and then downwardly through a fourth stage inertial impactor outflow port 124. The fourth stage minor flow impacts on the surface of the CD 122.

This embodiment illustrates how a multiple stage separation device can be constructed in compact fashion with generous flow passage dimensions using single sided major flow paths. In addition, the arrangement of Figure 9 provides a relatively large inlet aperture for inflow to the first stage in a radial direction, with the subsequent stages having annular inflow apertures extending concentrically with the centre line (A) and with the inflow passing in an axial direction.

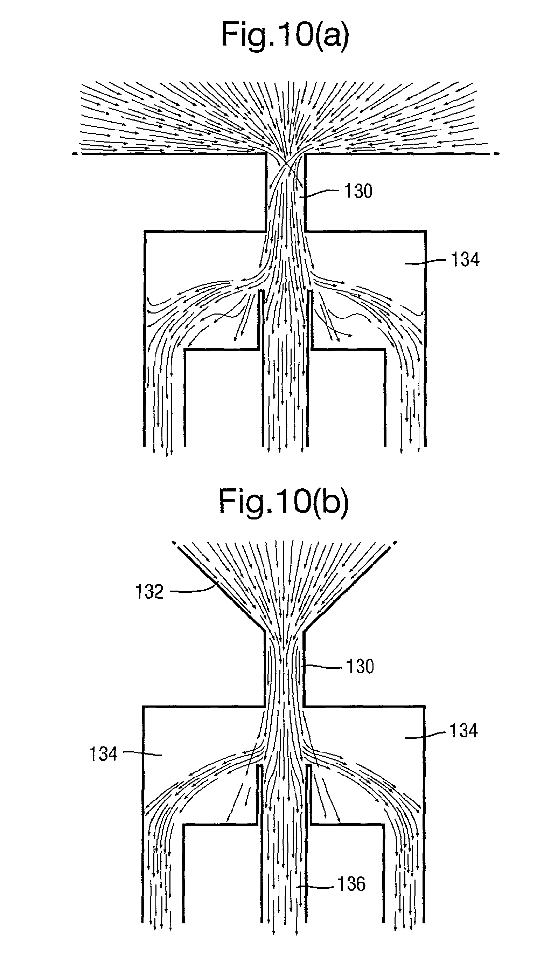

Referring now to Figures 10(a) and (b), the shape of the duct used to link between the first and second stages of the virtual impactor can strongly affect particle paths. Figure 10(a) illustrates the flow lines where there is no shaping upstream of the inlet slot 130. In this arrangement it can be seen that a significant number of particle trajectories are not parallel to the inlet to the walls of the slot 130 and therefore impact its walls. In addition, some of the large particles that should be drawn into the minor flow continue on their trajectory into the major flow region 134 where they impact on the walls.

We have found that by shaping the linking section so that the inlet entrance is funnelled or bell-mouthed, use can be made of the Coanda effect to render the flow less erratic to improve this separation performance. Thus, in Figure 10(b), the inlet slot 130 has a tapered entrance 132. The major flow in this embodiment is drawn from both sides through major flow portions 134 with the outflow passing through an outflow portion 136.

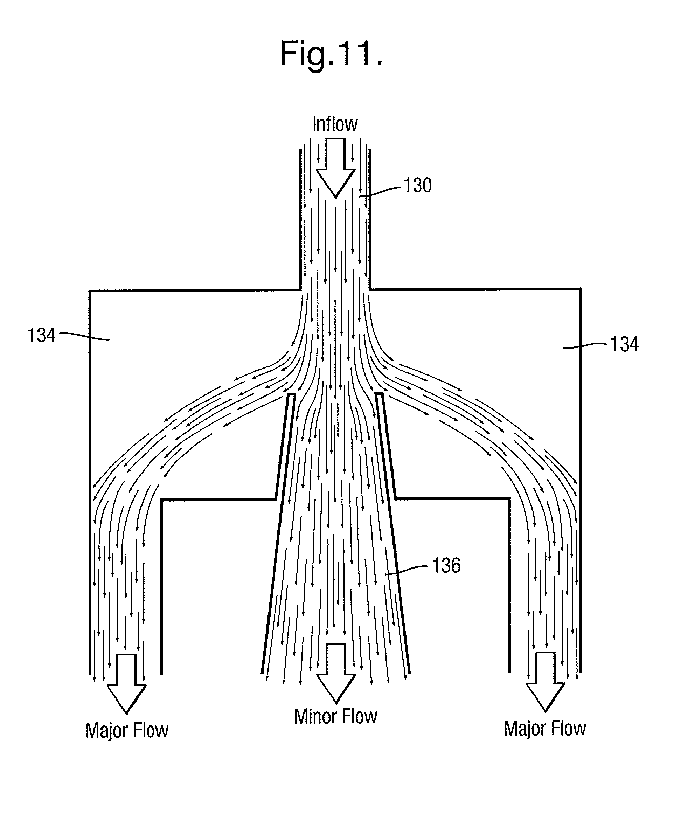

Turning now to Figure 11, in this arrangement, the inflow passes through an inlet aperture 130 (which, as with Figure 10 may be of conventional circular cross-section or an extended annular slot) with the major flow fractions passing through opposed major flow portions 134 and the minor flow continuing to a minor flow portion 136. Especially where the minor flow portion contains the particles of interest, it is important to minimise collisions of the minor flow particles with the outflow portion 136. For this reason, in this embodiment, the minor flow portion 136 tapers outwardly as shown.

It will be appreciated that the inlet shaping and outlet shaping may be incorporated in any of the embodiments described above.

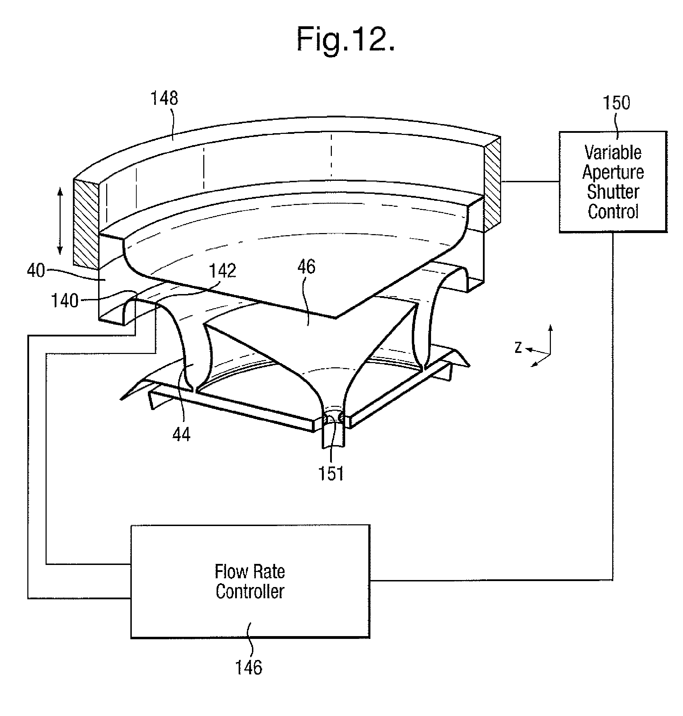

Referring now to Figure 12 showing a particle separator of the type shown in Figure 5(b) in which a Venturi meter arrangement is set up by appropriately shaping the inflow duct 40 and providing pressure sampling points 140, 142 in the walls of the inflow duct which pass to a controller 146, which detects the pressure signals and determines the inflow mass flow rate. The flow may be measured and used as part of the detection process. Alternatively, the flow rate may be measured and the value used to provide a signal to a flow control device that maintains the mass flow rate at a preset value. Thus, as shown, a cylindrical choke ring 148 is provided with actuating means 150 to shift it selectively to vary the effective inlet aperture area, thereby to maintain a given flow rate.

Other arrangements may be provided - for example in the arrangement of Figure 6, a choke ring may be provided with apertures the same size and angular spacing as the inlet apertures of the ports 56, with the choke ring being angularly or axially adjustable to choke the ports to vary the effective area thereof. The choke may be any of a variety of shapes to increase or decrease the cross-sectional area of the inflow depending on the geometry of the inflow at that point.

Also the venturi may be located at different locations in a single or multi-stage impactor of virtual or inertial type. Thus in Figure 12 a pipe type Venturi 151 is located on the first stage minor outlet pipe. These are merely examples of where the Venturi may be located. A particular single or multi-stage device may have several Venturi at different locations so as to allow various flows to be monitored for data collection or control. The major and minor flows may be monitored separately providing feedback to control several fans and/or to control several orifice plates associated with respective flow streams. Furthermore, the controller 146 is shown as controlling the inlet, and this is an example only. The flow may be controlled at any required point in the device. In multi-stage devices the controller may control individual stages independently in order to control the cut-off points of the particle fractions, and so the controller may be located midway through the device.

A further important advantage of the use of an annular impactor is that the design may more readily be scaled compared to one having a multiplicity of inlets. In order to do this, it is important that the ratio between all the various dimensions is maintained and that the annulus is scaled based on the Stokes number and that, for a given mass flow rate, the cross-sectional area of the entire annulus remains constant. This is important for sizing annuli to fit into a design. It is also important for scaling up to larger mass flow rates. Provided the ratio of area to mass flow rate is maintained, a particular shape of annular cross-section may be scaled up so that it has a larger diameter (to take a larger mass flow rate) and still collect the same particle range.

## Claims

1. A particle separator, comprising a body having a central axis (A), and at least one particle separator stage defined within said body, said particle separator stage including:
an inflow passage portion (30) having a cross-section in a plane perpendicular to said central axis that is of endless loop form, said inflow passage receiving an inflow,
at least one major flow passage portion (34) communicating with and extending at an angle to said inflow passage portion (30) for receiving a major flow fraction, and
a minor flow passage portion (36) having a cross-section in a plane parallel to said central axis that is of endless loop form and downstream of said inflow passage portion (30) for receiving a minor flow fraction.

2. A particle separator according to Claim 1, wherein said inflow (34) passage portion and said minor flow portion (36) passage have generally annular cross-sections concentric with said central axis (A).

3. A particle separator according to Claim 1, wherein said particle separator stage receives inflow from a preceding particle separator stage, said preceding particle separator stage comprising a respective inflow passage (24) disposed generally concentrically and parallel with said central axis (A), at least one major flow passage portion (28) communicating with and extending at an angle to said inflow passage for receiving a major flow fraction, and a minor flow passage portion (32) generally concentric with said central axis for receiving a minor flow fraction from said inflow passage portion (24).

4. A particle separator according to Claim 3, wherein the inflow and minor flow passage portion of said preceding stage are of generally circular cross-section.

5. A particle separator according to Claim 3 or Claim 4, wherein said preceding stage major flow passage (28) comprises a ring manifold surrounding said inflow passage (24) and communicating therewith.

6. A particle separator according to any of the preceding Claims, wherein said first mentioned particle separator stage comprises a single major flow passage portion (34) extending to one side only of said inflow portion.

7. A particle separator according to any of the preceding Claims, wherein the walls defining said passages portions are formed as solids of revolution about said central axis.

8. A particle separator comprising an inflow passage portion (30) and an outflow passage portion (36) for receiving a minor flow portion, and to one side only of said inflow passage portion, a major flow passage portion (34).

9. A particle separator comprising a body having a central axis and including a particle separator stage, said particle separator including at least one inflow passage (40) extending generally radially to receive an inflow, a major flow passage portion (44) extending at an angle from one side only of said inflow passage portion (40) for drawing a major flow fraction, and a minor flow passage portion (46) downstream of said inflow passage portion for drawing a minor flow fraction.

10. A particle separator according to Claim 9, wherein said inflow passage is defined by a number of a radial passages (56) having separate inlets and disposed radially around said central axis.

11. A particle separator according to Claim 9, wherein said inflow passage is a slot (40) defined by a solid of revolution of respective wall surfaces around said central axis.

12. A particle separator according to Claims 9 or 10, wherein flow passing down said major flow passage portion (44) passes to a succeeding particle separator stage.

13. A particle separator comprising first and second impactor stages, wherein the linking section between the outlet of said first stage and the inlet (130) to said second stage is shaped (132) to provide a generally smooth transition.

14. A particle separator comprising a virtual impactor having an inflow passage, at least one major flow passage and an outflow passage wherein said outflow passage (136) is divergent thereby to reduce wall impact by particles in the minor flow passing through said outflow passage.

15. A particle separator comprising an inflow passage (40), an outflow passage (46) and at least one major flow passage (44), including a flow detector (140, 142) for detecting or determining the flow rate through at least one of said passages.

16. A particle separator according to Claim 15, including a controller (146) responsive to said flow detector (140, 142) to control a flow adjuster (148, 150) that adjusts the flow rate through said passage (40).

17. A particle separator comprising one or more separator stages, flow detection means for detecting flow rate at a location in said separator and control means for controlling the flow rate at a given location.

18. A particle separator according to Claim 17, wherein said control means controls choke means.

19. A particle separator according to Claim 17, wherein said control means controls a fan.
